# EUROPEAN PATENT SPECIFICATION

(11) **EP 2 290 413 B1**
(45) Date of publication and mention of the grant of the patent: **18.09.2013**
(21) Application number: 09754658.4
(22) Date of filing: 25.05.2009
(51) Int. Cl.: G02B 5/30, B32B 7/02, C09J 7/02, C09J 133/00, G02F 1/1335

(54) **ADHESIVE POLARIZATION PLATE, IMAGE DISPLAY DEVICE AND METHODS FOR MANUFACTURING ADHESIVE POLARIZATION PLATE AND IMAGE DISPLAY DEVICE**
ADHÄSIVE POLARISATIONSPLATTE, BILDANZEIGEANORDNUNG UND VERFAHREN ZUR HERSTELLUNG EINER ADHÄSIVEN POLARISATIONSPLATTE UND BILDANZEIGEANORDNUNG
PLAQUE DE POLARISATION ADHÉSIVE, DISPOSITIF D AFFICHAGE D IMAGE ET PROCÉDÉS DE FABRICATION DE LA PLAQUE DE POLARISATION ADHÉSIVE ET DU DISPOSITIF D AFFICHAGE D IMAGE

(30) Priority: 27.05.2008 JP 2008138281; 21.05.2009 JP 2009122796
(43) Date of publication of application: 02.03.2011
(60) Divisional application: 12005506.6
(73) Proprietor: Nitto Denko Corporation, Ibaraki-shi Osaka 567-8680 (JP)
(72) Inventor: SUZUKI,Mitsuru, Ibaraki-shi Osaka 567-8680 (JP); YAMAMOTO,Shouji, Ibaraki-shi Osaka 567-8680 (JP); TAKEDA,Kentarou, Ibaraki-shi Osaka 567-8680 (JP); NAKAMURA,Kouzou, Ibaraki-shi Osaka 567-8680 (JP); SUGIMOTO,Yuu, Ibaraki-shi Osaka 567-8680 (JP)
(74) Representative: Grünecker, Kinkeldey, Stockmair & Schwanhäusser
(86) International application number: PCT/JP2009/059540
(87) International publication number: WO 2009/145150

(56) References cited:
- JP-A- 11 199 640
- JP-A- 11 295 522
- JP-A- 53 114 447
- JP-A- 2003 185 842
- JP-A- 2003 185 842
- JP-A- 2006 259 313
- JP-A- 2007 047 498
- JP-A- 2007 153 355
- US-A1- 2007 269 616

## Description

### TECHNICAL FIELD

The invention relates to a pressure-sensitive adhesive polarizing plate including a polarizer, a transparent protective film provided on only one side of the polarizer and a pressure-sensitive adhesive layer placed on the other side of the polarizer, and to a method for manufacture thereof. The invention also relates to an image display produced with the pressure-sensitive adhesive polarizing plate. The invention further relates to a method for manufacturing the image display.

### BACKGROUND ART

The liquid crystal displays needs to have polarizing plates placed on both sides of a glass substrate which forms a liquid crystal panel surface. A polarizing plate generally used includes a polarizer composed of a polyvinyl alcohol-based film and a dichroic material such as iodine, and a transparent polarizer-protecting film or films that are made of triacetylcellulose and bonded to one or both sides of the polarizer with a polyvinyl alcohol-based adhesive (Patent Documents 1 and 2). Rigorous durability has been required of polarizing plates, and durability under harsh environments at low and high temperatures has been required.

In general, a pressure-sensitive adhesive is used to bond the polarizing plates to a liquid crystal cell or other components. The pressure-sensitive adhesive is previously used to form a pressure-sensitive adhesive layer on one side of the polarizing plate, because it is advantageous in that the polarizing plate can be instantaneously fixed and that no drying process is necessary for the fixation of the polarizing plate. Thus, pressure-sensitive adhesive polarizing plates are generally used for the attachment of polarizing plates.

Patent Literature 1: JP-A No. 2006-220732
Patent Literature 2: JP-A No. 2001-296427

US 2007/269616 A1 discloses a polarizing plate comprising a polarizer and a cured resin layer, wherein the cure resin layer is formed directly on at least one surface of the polarizer, and the cured resin layer is formed of a solventless photocurable composition containing at least one of a polyfunctional acrylic nnomer and a polyfunctional methacrylic monomer, further a photocurable prepolymer and a photopolymerization initiator. JP-A-2006/259313 relates to a formed body for an optical material by forming a resin composition composed of an acrylic resin (a) and an aliphatic polyester resin (b), and further stretching the formed body.

JP-A-2003/185842 relates to a protective film of a polarizing plate, wherein the protective film is constituted by curing an energy ray-curing composition containing an energy ray polymerizable compound having a bridged hydrocarbon residue.

JP-A-2007/047498 relates to a protection film for a polarizing plate made of an epoxy-acrylate resin, the protective film including polyvinyl alcohol including iodine or dye.

### SUMMARY OF THE INVENTION

### Problems to be Solved by the Invention

The pressure-sensitive adhesive layer is generally used to form a polarizing plate having a polarizer and transparent protective films provided on both sides of the polarizer, and the pressure-sensitive adhesive layer is placed on the transparent protective film in such a polarizing plate. On the other hand, in view of a reduction in thickness, although a polarizing plate having a polarizer and a transparent protective film provided on only one side of the polarizer may be used, the pressure-sensitive adhesive layer is provided on the other side of the polarizer in such a polarizing plate. However, such a thin, pressure-sensitive adhesive polarizing plate having a transparent protective film provided on only one side of a polarizer has the problems of low durability and easy stretch-directional (MD-directional) cracking of the polarizer under the harsh environments. In particular, the cracking is more likely to occur in large-size polarizing plates.

For a reduction in thickness, there is proposed a polarizing plate having a polarizer and a protective film formed on at least one side of the polarizer (Japanese Patent No. 4131104). For a reduction in thickness, however, such a polarizing plate has a protective film that is directly formed on the polarizer in place of a transparent protective film, and the publication neither discloses nor suggests that cracking of a polarizer may occur in a thin, pressure-sensitive adhesive polarizing plate having a transparent protective film provided on only one side of a polarizer.

An object of the invention is to provide a pressure-sensitive adhesive polarizing plate that includes a polarizer and a transparent protective film provided on only one side of the polarizer and a pressure sensitive adhesive layer and has satisfactory durability even under harsh environments at low and high temperatures.

Another object of the invention is to provide an image display having such a pressure-sensitive adhesive polarizing plate and a method for manufacture thereof.

### Means for Solving the Problems

As a result of investigations, the inventors have found that the pressure-sensitive adhesive polarizing plate described below solves the problems described above, and have made the invention.

The present invention relates to a pressure-sensitive adhesive polarizing plate, including:
a polarizer (P);
a transparent protective film (E) provided on only one side of the polarizer (P) with an adhesive layer (G) interposed therebetween;
a pressure-sensitive adhesive layer (B) provided on another side of the polarizer (P) with a protective layer (H) having a tensile modulus of from 100 MPa to 2000 mPa interposed therebetween,
wherein the protective layer (H) is made from a protective layer-forming agent (H') that is a cyanoacrylate-based layer-forming agent, an epoxy-based layer-forming agent, an isocyanate-based layer-forming agent, or an acryl-based layer-forming agent.

In the pressure-sensitive adhesive polarizing plate, it is preferable that the protective layer (H) is made from a protective layer-forming agent (H') that is an active energy ray-curable layer-forming agent containing a curable component.

In the pressure-sensitive adhesive polarizing plate, it is preferable that the protective layer (H) satisfies the relation: (photoelastic coefficient (m²/N))x(thickness (m))≤1x10-¹⁴ (m³/N).

In addition, the present invention relates to a method for manufacturing a pressure-sensitive adhesive polarizing plate including a polarizer (P), a transparent protective film (E) provided on only one side of the polarizer (P) with an adhesive layer (G) interposed therebetween, and a pressure-sensitive adhesive layer (B) provided on another side of the polarizer (P) with a protective layer (H) interposed therebetween, including:
bonding the transparent protective film (E) to the polarizer (P) with the adhesive layer (G), interposed therebetween;
forming the protective layer (H) on one side of the polarizer (P); and
then placing the pressure-sensitive adhesive layer (B) on the protective layer (H), so that a laminate of the polarizer (P) and the pressure-sensitive adhesive layer (B) is formed, wherein
the protective layer (H) has a tensile modulus of 100 MPa to 2000 MPa; and
wherein the protective layer (H) is made from a protective layer-forming agent (H') that is a cyanoacrylate-based layer-forming agent, an epoxy-based layer-forming agent, an isocyanate-based layer-forming agent, or an acryl-based layer-forming agent.

In the method for manufacturing the pressure-sensitive adhesive polarizing plate, it is preferable that the protective layer (H) is made from a protective layer-forming agent (H') that is an active energy ray-curable layer-forming agent containing a curable component.

In the method for manufacturing the pressure-sensitive adhesive polarizing plate, it is preferable that the protective layer (H) satisfies the relation: (photoelastic coefficient (m²/N))x (thickness (m))≤1x10⁻¹⁴ (m³/N).

Furthermore, the present invention relates to an image display, including the abovementioned pressure-sensitive adhesive polarizing plate.

In addition, the present invention relates to a method for manufacturing an image display, including the steps of:
preparing a roll of a long sheet of the abovementioned pressure-sensitive adhesive polarizing plate according to its above mentioned method for manufacturing;
cutting the pressure-sensitive adhesive polarizing plate into a predetermined size with cutting means, while feeding the sheet from the roll; and
bonding the pressure-sensitive adhesive polarizing plate to an optical display unit with the pressure-sensitive adhesive layer (B) interposed therebetween after the cutting step.

### Effects of the Invention

The mechanism of cracking of a polarizer is considered to be as follows. In a general process of manufacturing a polarizer, which includes dyeing and stretching a polyvinyl alcohol-based film, the film is stretched to a very high degree so as to have a high level of polarizing properties. Since polyvinyl alcohol molecules exhibit high orientation, therefore, the film has such mechanical properties that it has a very high strength in the stretch direction (MD direction) but is very brittle in the TD direction perpendicular thereto. Therefore, when external stress is applied to the polarizer, cracking easily occurs in the MD direction. Such cracking causes a serious problem with the display properties of an image display. Examples of such external stress include humidification/drying, heating/cooling, and mechanical tension, compression, and bending. Specifically, in the case of humidification/drying, the polarizer, which is made of polyvinyl alcohol or other hydrophilic materials, absorbs/releases water depending on the external environment, so that it expands and contracts. Specifically, the polarizer absorbs moisture in an amount of 5 to 30% by weight, and in this range, its volume contracts/expands. In general, protective films are used on both sides of the polarizer so that the polarizer surface can be prevented from being scratched, such abrupt absorption and release of water can be prevented, the polarizer can be prevented from being changed by such absorption and release of water, and the polarizer can be mechanically maintained. In the case of heating/cooling, the transparent protective films can also serve to inhibit thermal expansion and contraction of the polarizer. Against an external force such as mechanical tension or compression, the transparent protective films can resist stress applied to the polarizer to prevent the polarizer from being cracked. On the other hand, in a conventional polarizing plate having a transparent protective film provided on only one side of a polarizer, however, the polarizer cannot be prevented from being cracked in the MD direction, because the polarizing plate has an asymmetrical structure and the one side of the polarizer is kept in a free state. The pressure-sensitive adhesive layer has a low density and therefore is less capable of blocking infiltration of water. The pressure-sensitive adhesive layer also has a very low elastic modulus, and therefore its ability to mechanically hold the polarizer is very low. Thus, the pressure-sensitive adhesive layer may be considered to keep the polarizer free.

The present invention is directed to a thin pressure-sensitive adhesive polarizing plate including a polarizer (P), a transparent protective film (E) provided on only one side of the polarizer (P) with an adhesive layer (G) interposed therebetween, and a pressure-sensitive adhesive layer (B) provided on the other side of the polarizer (P), in which a protective layer (H) with a tensile modulus of 100 MPa to 2000 MPa is provided between the pressure-sensitive adhesive layer (B) and the polarizer (P). The protective layer (H) can prevent the polarizer from being cracked in the MD direction and ensure durability even under harsh environments.

Although the pressure-sensitive adhesive polarizing plate of the invention is relatively thin, it has high durability even under harsh environments and therefore, the use of the pressure-sensitive adhesive polarizing plate makes it possible to manufacture an image display with high working efficiency. In particular, the pressure-sensitive adhesive polarizing plate of the invention is suitable for use in a method for manufacturing an image display in which the steps of providing a roll of the pressure-sensitive adhesive polarizing plate, cutting the polarizing plate, and bonding the cut piece to an optical display unit are performed in a continuous process.

### BRIEF DESCRIPTION OF DRAWINGS

Fig. 1 is a schematic cross-sectional view of a pressure-sensitive adhesive polarizing plate according to a preferred embodiment of the invention; and
Fig. 2 is a flow chart showing an example of the conventional method for manufacturing an optical display unit.

### EMBODIMENTS FOR CARRYING OUT THE INVENTION

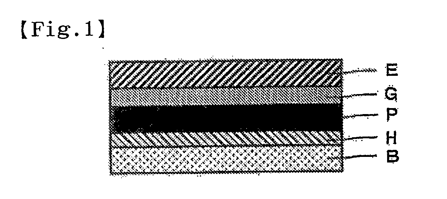

The pressure-sensitive adhesive polarizing plate of the present invention is described below with reference to Fig. 1. As shown in Fig. 1, for example, the pressure-sensitive adhesive polarizing plate of the invention includes a polarizer (P), a transparent protective film (E) provided on only one side of the polarizer (P) with an adhesive layer (G) interposed therebetween, and a pressure-sensitive adhesive layer (B) provided on the other side of the polarizer (P) with a protective layer (H) interposed therebetween. Although not shown in the drawing, the transparent protective film (E) may be covered with an adhesion facilitating layer or subjected to an activation treatment, and the adhesion facilitating layer may be bonded to the adhesive layer (G) to form the pressure-sensitive adhesive polarizing plate of the invention. Although not shown in the drawing, a release sheet may be provided on the pressure-sensitive adhesive layer (B).

The diagonal size of the pressure-sensitive adhesive polarizing plate of the invention is preferably, but not limited to, in the range of 35.6 to 304.9 cm (14 inches to 120 inches). This is because as the size increases, the thin pressure-sensitive adhesive polarizing plate having a transparent protective film only on one side becomes susceptible to cracking under severe environments. It will be understood that the size may be less than 35.6 cm (14 inches). The size of the pressure-sensitive adhesive polarizing plate to be used is generally 208.3 cm (82 inches) or less.

### [Polarizer]

The polarizer is intended to include a film capable of converting natural light or polarized light to the desired polarized light. In an embodiment of the invention, any appropriate polarizer may be used, while a polarizer capable of converting natural light or polarized light to linearly polarized light is preferably used.

In the polarizing plate of the invention, any appropriate polarizer may be used as the polarizer (P) depending on the purpose. As a polarizer, for example, a film that is uniaxially stretched after having dichromatic substances, such as iodine and dichromatic dye, absorbed to hydrophilic high molecular weight polymer films, such as polyvinyl alcohol-based film, partially formalized polyvinyl alcohol-based film, and ethylene-vinyl acetate copolymer-based partially saponified film; poly-ene-based orientation films, such as dehydrated polyvinyl alcohol and dehydrochlorinated polyvinyl chloride, etc. may be mentioned. Examples of the polarizer that may be used also include an O-type guest-host polarizer as disclosed in U.S. Patent No. 5,523,863 in which a liquid crystalline composition containing a dichroic substance and a liquid crystalline compound is oriented in a certain direction; and an E-type polarizer as disclosed in U.S. Patent No. 6,049,428 in which a lyotropic liquid crystal is oriented in a certain direction.

Among these polarizers, an iodine-containing, polyvinyl alcohol-based film polarizer is preferably used, because of its high degree of polarization. Examples of materials for the polyvinyl alcohol film for the polarizer of this invention include polyvinyl alcohol and derivatives thereof. Examples of polyvinyl alcohol derivatives include polyvinyl formal and polyvinyl acetal and those modified with olefins such as ethylene and propylene, those modified with unsaturated carboxylic acids such as acrylic acid, methacrylic acid and crotonic acid, those modified with alkyl esters of unsaturated carboxylic acids, and those modified with acrylamide or the like. The degree of polymerization of the polyvinyl alcohol is preferably from 100 to 1,000. The degree of saponification of the polyvinyl alcohol is generally from 80 to 100% by mole.

The polyvinyl alcohol film may also contain an additive such as a plasticizer and a surfactant. Examples of the plasticizer include polyols and condensates thereof, such as glycerol, diglycerol, triglycerol, ethylene glycol, propylene glycol, and polyethylene glycol. The plasticizer is, but not limited to, preferably used at a concentration of 20% by weight or less in the polyvinyl alcohol film.

According to conventional techniques, the polyvinyl alcohol-based film (unstretched film) may be subjected to at least a uniaxial stretching treatment and a dyeing treatment with iodine. A boric acid treatment and an iodide ion treatment may be further performed. According to conventional techniques, the polyvinyl alcohol-based film having undergone the treatments (stretched film) may be dried to give a polarizer.

The polarizer (P) used in the polarizing plate of the invention may have any appropriate thickness. The thickness of the polarizer is typically from 5 to 80 µm, preferably from 10 to 50 µm, more preferably from 20 to 40 µm. In the above range, excellent optical properties and mechanical strength can be provided.

### [Transparent protectective film]

A thermoplastic resin with a high level of transparency, mechanical strength, thermal stability, moisture blocking properties, isotropy, and the like may be used as a material for forming the transparent protective film. Examples of such a thermoplastic resin include cellulose resins such as triacetylcellulose, polyester resins, polyethersulfone resins, polysulfone resins, polycarbonate resins, polyamide resins, polyimide resins, polyolefin resins, (meth)acrylic resins, cyclic olefin polymer resins (norbornene resins), polyarylate resins, polystyrene resins, polyvinyl alcohol resins, and any mixture thereof.

The transparent protective film may contain any one or more appropriate additives. Examples of such an additive include an ultraviolet absorbing agent, an antioxidant, a lubricant, a plasticizer, a release agent, an anti-discoloration agent, a flame retardant, a nucleating agent, an antistatic agent, a pigment, and a colorant. The content of the thermoplastic resin in the transparent protective film is preferably from 50 to 100% by weight, more preferably from 50 to 99% by weight, even more preferably from 60 to 98% by weight, in particular, preferably from 70 to 97% by weight. If the content of the thermoplastic resin in the transparent protective film is less than 50% by weight, high transparency and other properties inherent in the thermoplastic resin may be insufficiently exhibited. Amorphous PO films, cycloolefin polymer (COP) films, Arton films (manufactured by JSR Corporation), Zeonor films (manufactured by Zeon Corporation), and so on may also be used.

The thickness of the transparent protective film is generally from 1 to 500 µm, in view of strength, workability such as handleability, thin layer formability, or the like, while it may be determined as needed. And in case of thin type, The thickness of the transparent protective film is preferably from 1 to 30 µm, more preferably from 5 to 200 µm, much more preferably from 5 to 150 µm, still much more preferably 20 to 100 µm.

At least one selected from a polyester resin, a cellulose resin, a polycarbonate resin, a cyclic polyolefin resin, and a (meth)acrylic resin is preferably used for the transparent protective film according to the present invention.

For example, the polyester resin may be, but not limited to, any one of homopolymers obtained by polycondensation of one dicarboxylic acid and one diol, copolymers obtained by polycondensation of one or more dicarboxylic acids and two or more diols or copolymers or a copolymer obtained by polycondensation of two or more dicarboxylic acids and one or more diols, and a resin blend containing two or more of the homopolymers or copolymers, in which examples of one or more dicarboxylic acids include terephthalic acid, isophthalic acid, orthophthalic acid, 2,5-naphthalenedicarboxylic acid, 1,4-naphthalenedicarboxylic acid, 1,5-naphthalenedicarboxylic acid, diphenylcarboxylic acid, diphenoxyethanedicarboxylic acid, diphenylsulfonecarboxylic acid, anthracenedicarboxylic acid, 1,3-cyclopentanedicarboxylic acid, 1,3-cyclohexanedicarboxylic acid, 1,4-cyclohexanedicarboxylic acid, hexahydroterephthalic acid, malonic acid, dimethylmalonic acid, succinic acid, 3,3-diethylsuccinic acid, glutaric acid, 2,2-dimethylglutaric acid, adipic acid, 2-methyladipic acid, trimethyladipic acid, pimelic acid, azelaic acid, dimer acid, sebacic acid, suberic acid, and dodecadicarboxylic acid, and examples of one or more diols include ethylene glycol, propylene glycol, hexamethylene glycol, neopentyl glycol, 1,2-cyclohexanedimethanol, 1,4-cyclohexanedimethanol, decamethylene glycol, 1,3-propanediol, 1,4-butanediol, 1,5-pentanediol, 1,6-hexanediol, 2,2-bis(4-hydroxyphenyl)propane, and bis(4-hydroxyphenyl)sulfone. In particular, polyethylene terephthalate resins are preferably used.

The cellulose resin is an ester of cellulose and a fatty acid. Examples of such a cellulose ester resin include triacetyl cellulose, diacetyl cellulose, tripropionyl cellulose, dipropionyl cellulose, and the like. In particular, triacetyl cellulose is preferred. Much commercially available triacetyl celluloses are placing on sale and are advantageous in view of easy availability and cost. Examples of commercially available products of triacetyl cellulose include UV-50, UV-80, SH-80, TD-80U, TD-TAC, and UZ-TAC (trade names) manufactured by Fujifilm Corporation, and KC series manufactured by Konica Minolta. In general, these triacetyl cellulose products have a thickness direction retardation (Rth) of about 60 nm or less, while having an in-plane retardation (Re) of almost zero.

For example, the cyclic polyolefin resin is preferably a norbornene resin. Cyclic olefin resin is a generic name for resins produced by polymerization of cyclic olefin used as a polymerizable unit, and examples thereof include the resins disclosed in JP-A Nos. 01-240517, 03-14882, and 03-122137. Specific examples thereof include ring-opened (co)polymers of cyclic olefins, addition polymers of cyclic olefins, copolymers (typically random copolymers) of cyclic olefins and α-olefins such as ethylene and propylene, graft polymers produced by modification thereof with unsaturated carboxylic acids or derivatives thereof, and hydrides thereof. Examples of the cyclic olefin include norbornene monomers.

Various commercially available cyclic polyolefin resins are placing on sale. Examples thereof include Zeonex (trade name) and Zeonor (trade name) series manufactured by Zeon Corporation, Arton (trade name) series manufactured by JSR Corporation, Topas (trade name) series manufactured by Ticona, and Apel (trade name) series manufactured by Mitsui Chemicals, Inc.

The (meth)acrylic resin preferably has a glass transition temperature (Tg) of 115°C or more, more preferably of 120°C or more, still more preferably of 125°C or more, particularly preferably of 130°C or more. If the Tg is 115°C or more, the resulting polarizing plate can have good durability. The upper limit to the Tg of the (meth)acrylic resin is preferably, but not limited to, 170°C or less, in view of formability and the like. The (meth)acrylic resin can form a film with an in-plane retardation (Re) of almost zero and a thickness direction retardation (Rth) of almost zero.

Any appropriate (meth)acrylic resin may be used as long as the advantages of the present invention are not reduced. Examples of such a (meth)acrylic resin include poly(meth)acrylate such as poly(methyl methacrylate), methyl methacrylate-(meth)acrylic acid copolymers, methyl methacrylate-(meth)acrylate copolymers, methyl methacrylate-acrylate-(meth)acrylic acid copolymers, methyl (meth)acrylate-styrene copolymers (such as MS resins), and alicyclic hydrocarbon group-containing polymers (such as methyl methacrylate-cyclohexyl methacrylate copolymers and methyl methacrylate-norbornyl (meth)acrylate copolymers). Poly(C₁₋₆ alkyl (meth)acrylate) such as poly(methyl (meth)acrylate) is preferred, and a methyl methacrylate-based resin mainly composed of a methyl methacrylate unit (50 to 100% by weight, preferably 70 to 100% by weight) is more preferred.

Examples of the (meth)acrylic resin include Acrypet VH and Acrypet VRL20A each manufactured by Mitsubishi Rayon Co., Ltd., (meth)acrylic resins having a ring structure in their molecule as disclosed in JP-A No. 2004-70296, and high-Tg (meth)acrylic resins produced by intramolecular crosslinking or intramolecular cyclization reaction.

Lactone ring structure-containing (meth)acrylic resins may also be used. Examples of the lactone ring structure-containing (meth)acrylic reins include the (meth)acrylic reins disclosed in JP-A Nos. 2000-230016, 2001-151814, 2002-120326, 2002-254544, and 2005-146084.

The (meth)acryl-based resin may be an acrylic resin having an alkyl unsaturated carboxylate structural unit and a glutaric anhydride structural unit. Examples of such an acrylic resin include those disclosed in JP-A Nos. 2004-70290, 2004-70296, 2004-163924, 2004-292812, 2005-314534, 2006-131898, 2006-206881, 2006-265532, 2006-283013, 2006-299005, and 2006-335902.

The (meth)acryl-based resin may be a thermoplastic resin having a glutarimide unit, a (meth)acrylate unit, and an aromatic vinyl unit. Examples of such a thermoplastic resin include those disclosed in JP-A Nos. 2006-309033, 2006-317560, 2006-328329, 2006-328334, 2006-337491, 2006-337492, 2006-337493, and 2006-337569.

### (Retardation Value of Transparent Protective Film)

The transparent protective film (E) to be used may have an in-plane retardation of less than 40 nm and a thickness direction retardation of less than 80 nm so that it can have low birefringence and be capable of not changing polarization. A typical example of such a low-birefringence transparent protective film may be an unstretched film.

### [Adhesive Layer]

The transparent protective film (E) and the polarizer (P) are laminated with the adhesive layer (G) interposed therebetween. In this structure, the pressure-sensitive adhesive layer is preferably used to laminate them with no air gap interposed therebetween. The pressure-sensitive adhesive layer (G) is made of an adhesive (G'). Any type of adhesive may be used as the adhesive (G').

The adhesive layer (G) used to bond the polarizer (P) and the transparent protective film (E) together may be of any of various types such as a water-based type, solvent-based type, hot melt type, or radical-curable type, as long as it is optically transparent. In particular, a water-based adhesive or a radical-curable adhesive is preferred.

Examples of the water-based adhesive used to form the adhesive layer (G) include, but are not limited to, a vinyl polymer-based adhesive, a gelatin-based adhesive, a vinyl-based adhesive, a latex-based adhesive, a polyurethane-based adhesive, an isocyanate-based adhesive, a polyester-based adhesive, and an epoxy-based adhesive. The adhesive layer may be produced from such a water-based adhesive by applying an aqueous solution of the adhesive and drying it. In the preparation of the aqueous solution, if necessary, a crosslinking agent or any other additive and a catalyst such as an acid may also be added. A vinyl polymer-containing adhesive or the like is preferably used as the water-based adhesive, and the vinyl polymer is preferably a polyvinyl alcohol-based resin. The polyvinyl alcohol-based resin may also contain a water-soluble crosslinking agent such as boric acid, borax, glutaraldehyde, melamine, or oxalic acid. Particularly when a polyvinyl alcohol-based polymer film is used to form the polarizer, an adhesive containing polyvinyl alcohol-based resin is preferably used in view of tackiness. An adhesive that contains a polyvinyl alcohol-based resin having an acetoacetyl group is more preferred in order to improve durability.

Examples of polyvinyl alcohol-based resin include: a polyvinyl alcohol obtained by saponifying a polyvinyl acetate; a derivative thereof; a saponified copolymer of vinyl acetate and a monomer copolymerizable therewith; and polyvinyl alcohols modified by acetalization, urethanization, etherification, grafting, phosphate esterification and the like. Examples of the monomers include, unsaturated carboxylic acids such as maleic anhydride, fumaric acid, crotonic acid, itaconic acid and (meth) acrylic acid, and esters thereof; α-olefins such as ethylene and propylene; (meth)allylsulfonic acid or sodium salt thereof, (meth)allylsulfonate; sodium sulfonate (monoalkyl maleate), sodium disulfonate (alkyl maleate); N-methylolacrylamide; an alkai salt of acrylamide alkylsulfonate; N-vinylpyrrolidone, a derivative of N-vinylpyrrolidone and the like. The polyvinyl alcohol-based resins can be either used alone or in combination of two kinds or more.

While no specific limitation is imposed on a polyvinyl alcohol-based resin, an average degree of polymerization is from 100 to 5000, preferably from 1000 to 4000 and an average degree of saponification is from 85 to 100 mol %, preferably from 90 to 100 mol % in consideration of adherence.

A polyvinyl alcohol-based resin having an acetoacetyl group is obtained by reacting a polyvinyl alcohol-based resin and diketene to each other with a known method. Examples of known methods include: a method in which a polyvinyl alcohol-based resin is dispersed into a solvent such as acetic acid, to which diketene is added and a method in which a polyvinyl alcohol-based resin is previously dissolved into a solvent such as dimethylformamide or dioxane, to which diketene is added. Another example is a method in which diketene gas or diketene liquid is brought into direct contact with a polyvinyl alcohol.

No specific limitation is imposed on a degree of modification by an acetoacetyl group in a polyvinyl alcohol-based resin having an acetoacetyl group or groups as far as the degree of modification is 0.1 mol % or more. If the degree of modification is less than 0.1 mol %, water resistance of an adhesive layer is insufficient, which is improper. A degree of modification by an acetoacetyl group is preferably from 0.1 to 40 mol %, more preferably from 1 to 20 mol %, especially preferably from 2 to 7 mol %. If a degree of modification by an acetoacetyl group exceeds 40 mol %, reaction sites with a crosslinking agent is fewer to thereby reduce an effect of improvement on moisture resistance and heat resistance. The degree of modification by an acetoacetyl group is a value determined by NMR.

Any of crosslinking agents that have been used in a polyvinyl alcohol-based adhesive can be used as a crosslinking agent in the present invention without a specific limitation thereon. While the amount of the crosslinking agent to be blended may be appropriately determined depending on the type of the polyvinyl alcohol-based resin and the like, it is generally from 4 to 60 parts by weight, preferably from 10 to 55 parts by weight, more preferably from 20 to 50 parts by weight, based on 100 parts by weight of the polyvinyl alcohol-based resin. In such ranges, good adhesion properties can be obtained.

In order to increase durability, a polyvinyl alcohol-based resin having an acetoacetyl group is used. Also in this case, the crosslinking agent may be used in an amount of 4 to 60 parts by weight, preferably in an amount of 10 to 55 parts by weight, more preferably in an amount of 20 to 50 parts by weight, similarly to the above, based on 100 parts by weight of the polyvinyl alcohol-based resin. If the amount of the crosslinking agent to be blended is too large, the reaction of the crosslinking agent can proceed within a short time so that the adhesive can tend to form a gel, and as a result, the adhesive can have an extremely short pot life and thus can be difficult to use industrially. From these points of view, the crosslinking agent is used in the above amount, but the resin solution according to the present invention can be stably used even when the amount of the crosslinking agent is large as mentioned above, because the resin solution contains the colloidal metal compound.

In an embodiment of the present invention, a resin solution containing a polyvinyl alcohol-based resin, a crosslinking agent and a colloidal metal compound with an average particle size of 1 to 100 nm is preferably used as the adhesive. The resin solution is generally used in the form of an aqueous solution. The concentration of the resin solution may be, but not limited to, from 0.1 to 15% by weight, preferably from 0.5 to 10% by weight, in view of coatability, storage stability or the like.

The viscosity of the resin solution, which is used as the adhesive, is generally, but not limited to, from 1 to 50 mPa·s. In the preparation of conventional polarizing plates, the occurrence of knick defects tends to increase as the viscosity of a resin solution decreases. Using the adhesive for polarizing plate of the present invention, however, the occurrence of knick defects can be prevented even in a low viscosity range such as the range of 1 to 20 mPa·s, and thus the occurrence of knick defects can be prevented regardless of the viscosity of the resin solution. Polyvinyl alcohol-based resin having an acetoacetyl groups cannot have high degree of polymerization in contrast to other general polyvinyl alcohol-based resins, and therefore they are used at a low viscosity as mentioned above. According to the present invention, however, knick defects, which would otherwise be caused by the low viscosity of the resin solution, can be prevented from occurring even when the polyvinyl alcohol-based resin having an acetoacetyl group is being used.

When a water-based adhesive or the like is used to form the adhesive layer (G1), the adhesive layer may have a thickness of 10 to 300 nm. The thickness of the adhesive layer (G1) is more preferably from 10 to 200 nm, still more preferably from 20 to 150 nm, in terms of achieving uniform in-plane thickness and sufficient adhesive force.

After the adhesive is coated, the transparent protective film (E) is adhered to the polarizer (P) with a roll laminator or the like. The adhesive may be applied to any one or both of the transparent protective film and the polarizer. After adhesion, a drying step is performed to thereby form an adhesive layer that is a dry coated layer. A drying temperature is from 5 to 150°C, preferably from 30 to 120°C and for a time of 120 sec or longer, preferably for a time 300 sec or longer.

Examples of the radical-curable adhesive include various types such as an active energy ray-curable type such as an electron beam-curable type or an ultraviolet-curable type, and a thermosetting type. An active energy ray-curable type is preferred, because it is curable in a short time. An electron beam-curable type is particularly preferred, and an electron beam-curable adhesive may be used. The use of an electron beam in the process of curing the adhesive used for bonding the polarizer to the transparent protective film (specifically dry lamination) can eliminate a heating process, which would otherwise be necessary for an ultraviolet-ray curing method, and thus can provide very high productivity.

When a curable type adhesive (electron beam-curable adhesive) is used to form the adhesive layer (G1), on the other hand, the adhesive layer (G1) preferably has a thickness of 0.1 to 20 µm, more preferably 0.2 to 10 µm, even more preferably 0.3 to 8 µm. If the adhesive layer is too thin, the cohesive strength for the adhesion may be lost, so that the adhesive strength may be lost. If the thickness of the adhesive layer (G1) is more than 20 µm, the cost may increase, and the adhesive itself may have a curing shrinkage effect, which may have an adverse effect on the optical properties of the polarizing plate.

### [Pressure-Sensitive Adhesive Layer]

Any appropriate type of pressure-sensitive adhesive may be used to form the pressure-sensitive adhesive layer (B). Examples of the pressure-sensitive adhesive include rubber pressure-sensitive adhesives, acryl-based pressure-sensitive adhesives, silicone pressure-sensitive adhesives, urethane pressure-sensitive adhesives, vinyl alkyl ether pressure-sensitive adhesives, polyvinyl alcohol pressure-sensitive adhesives, polyvinylpyrrolidone pressure-sensitive adhesives, polyacrylamide pressure-sensitive adhesives, and cellulose pressure-sensitive adhesives.

Among these pressure-sensitive adhesives, those that may be preferably used have excellent optical transparency and weather resistance or heat resistance and exhibits appropriate wettability and pressure-sensitive adhesive properties such as appropriate cohesiveness and tackiness. Acryl-based pressure-sensitive adhesives have such properties and therefore are preferably used.

The pressure-sensitive adhesive layer (B) is generally formed by applying a solution of the pressure-sensitive adhesive to a release sheet and drying the coating. For example, the pressure-sensitive adhesive solution may be prepared by dissolving or dispersing the composition in an appropriate single or mixed solvent such as toluene, ethyl acetate or a mixture thereof so that an 10 to 40% by weight solution can be formed. The application method to be used may be roll coating such as reverse coating or gravure coating, spin coating, screen coating, fountain coating, dipping, spraying, or any other coating method. The pressure-sensitive adhesive layer (B)-carrying release sheet may be subjects to a process of transferring it. Alternatively, the pressure-sensitive adhesive layer (B) may be formed as a coating film by applying the pressure-sensitive adhesive to the protective layer (H) provided on one side of the polarizer (P).

The thickness of the pressure-sensitive adhesive layer (B) is generally from 3 to 100 µm, preferably from 5 to 50 µm, more preferably from 10 to 40 µm.

The material used to form the release sheet may be any appropriate thin material such as paper, a film of synthetic resin such as polyethylene, polypropylene or polyethylene terephthalate, a robber sheet, a paper sheet, a cloth, a nonwoven fabric, a net, a foam sheet, a metal foil, or a laminate thereof. If necessary, the surface of the release sheet may be subjected to an adhesion-reducing release treatment to increase the releasability from the pressure-sensitive adhesive layer, such as a silicone treatment, a long-chain alkyl treatment or a fluoride treatment.

### [Protective Layer]

The protective layer (H) is placed between the polarizer (P) and the pressure-sensitive adhesive layer (B). The protective layer (H) has a tensile modulus of 100 MPa to 2000 MPa. In an embodiment of the invention, the protective layer (H) having a tensile modulus of 100 MPa inhibits expansion and contraction of the polarizer (P) due to external stress such as humidification/drying, heating/cooling, or mechanical pulling, compressing or bending, and inhibits cracking of the polarizer. Cracking of the polarizer (P) is mainly caused by a dimensional change in the direction of contraction of the polarizer (P). As the tensile modulus of the protective layer (H) increases, the mechanically holding ability of the protective layer (H) increases so that the effect of preventing cracking of the polarizer increases.

The protective layer (H) is formed using a protective layer-forming agent (H') such as a cyanoacrylate-based layer-forming agent, an epoxy-based layer-forming agent, an isocyanate-based layer-forming agent, or an acryl-based layer-forming agent. The tensile modulus is from 100 to 2,000 MPa, preferably from 150 to 1,000 MPa, more preferably from 500 to 1,000 MPa in view of durability or other properties.

Examples of the cyanoacrylate-based layer-forming agent include alkyl-α-cyanoacrylate such as methyl-α-cyanoacrylate, ethyl-α-cyanoacrylate, butyl-α-cyanoacrylate, or octyl-α-cyanoacrylate, cyclohexyl-α-cyanoacrylate, and methoxy-α-cyanoacrylate. For example, the cyanoacrylate-based layer-forming agent may be one used as a cyanoacrylate-based adhesive.

The epoxy-based layer-forming agent may contain an epoxy resin and a curing agent therefore. For example, the epoxy-based layer-forming agent may be one used as an epoxy-based adhesive. The epoxy-based layer-forming agent is generally used in the form of a two-component system, in which a curing agent is added to an epoxy resin, while it may be used in the form of a one-component system, which contains an epoxy resin and a curing agent therefore. The epoxy-based layer-forming agent is generally used in the form of a solution. The solution may be a solvent system, an emulsion, a colloidal dispersion, or an aqueous system such as an aqueous solution.

Examples of the epoxy resin may include a variety of compounds having two or more epoxy groups per molecule, such as bisphenol type epoxy resins, aliphatic type epoxy reins, aromatic type epoxy resins, halogenated bisphenol type epoxy resins, and biphenyl type epoxy resins. The epoxy resin may be appropriately determined depending on the epoxy equivalent or the number of functional groups, and in view of durability, epoxy resins with an epoxy equivalent of 500 or less are preferably used.

Various types of curing agents which include, but are not limited to, phenolic resin type, acid anhydride type, carboxylic acid type, and polyamine type curing agents may be used for the epoxy resin. Examples of phenolic resin type curing agents that may be used include phenolic novolac resins, bisphenol novolac resins, xylylene phenol resins, and cresol novolac resins. Examples of acid anhydride type curing agents include maleic anhydride, tetrahydrophthalic anhydride, hexahydrophthalic anhydride, and succinic anhydride; and examples of carboxylic acid type curing agents include carboxylic acids such as pyromellitic acid and trimellitic acid, and blocked carboxylic acids formed by addition of vinyl ether. Examples of epoxy type two-component, layer-forming agents that may be used include a combination of two components, an epoxy resin and a polythiol, and a combination of two components, an epoxy resin and a polyamide.

The content of the curing agent is preferably from 30 to 70 parts by weight, more preferably from 40 to 60 parts by weight, based on 100 parts by weight of the epoxy resin, while it depends on the equivalent to the epoxy resin.

In addition to the epoxy resin and the curing agent therefore, any of various curing accelerators may be used in the epoxy-based layer-forming agent. Examples of curing accelerators include various imidazole compounds and derivatives thereof, and dicyandiamide.

Among the epoxy-based layer-forming agents, a two-component type curable epoxy resin agent is preferably used in an embodiment of the invention, in which the epoxy resin is preferably a bisphenol A type epoxy resin, and the curing component is preferably an amine curing agent, particularly a cyclic amine curing agent. In addition, any one of the components preferably contains an anionic curing accelerator. Examples of such an anionic curing accelerator include an aromatic tertiary amine compound, a lactone compound, 1,2,6-hexanetriol, N,N-dicyclohexylcarbodiimide, and succinic acid amide.

The isocyanate-based layer-forming agent may be used as a crosslinking agent to form the pressure-sensitive adhesive layer (B). A compound having at least two isocyanate groups may be used as such an isocyanate type crosslinking agent. For example, the polyisocyanate compound may be used as the isocyanate-based layer-forming agent. Specific examples thereof include 2,4-tolylene diisocyanate, 2,6-tolylene diisocyanate, xylylene diisocyanate, 1,3-bisisocyanatomethylcyclohexane, hexamethylene diisocyanate, tetramethylxylylene diisocyanate, m-isopropenyl-α,α-dimethylbenzyl isocyanate, methylene bis(4-phenyl isocyanate), p-phenylene diisocyanate, or a dimer thereof, a trimer such as tris(6-isocyanatohexyl) isocyanurate, and reaction products thereof with polyhydric alcohol or a polyamine, such as biuret or trimethylolpropane. The isocyanate type crosslinking agent is also preferably a compound having three or more isocyanate groups, such as tris(6-isocyanatohexyl) isocyanurate. Examples of the isocyanate-based layer-forming agent include those used as isocyanate type adhesives.

In particular, an isocyanate-based layer-forming agent having a rigid structure in which a cyclic structure (such as a benzene ring, a cyanurate ring, or a isocyanurate ring) makes up a large part of the molecular structure is preferably used in the present invention. For example, trimethylolpropane-tri-tolyleneisocyanate, tris(hexamethyleneisocyanate)isocyanurate, or the like is preferably used as the isocyanate-based layer-forming agent.

The isocyanate type crosslinking agent to be used may have a protecting group attached to the terminal isocyanate group. The protecting group may be oxime, lactam, or the like. The protecting group can be dissociated from the isocyanate group by heating the blocked isocyanate group, so that the isocyanate group becomes available for reaction.

A reaction catalyst may be used to enhance the reactivity of the isocyanate group. Such a reaction catalyst is preferably, but not limited to, a tin-based catalyst or an amine catalyst. One or more reaction catalysts may be used. The reaction catalyst is generally used in an amount of 5 parts by weight or less based on 100 parts by weight of the isocyanate type crosslinking agent. If the amount of the reaction catalyst is large, the crosslinking reaction rate may be so high that the layer-forming agent may foam. If the layer-forming agent is used after it foams, sufficient tackiness cannot be obtained. In general, the reaction catalyst is preferably used in an amount of 0.01 to 5 parts by weight, more preferably 0.05 to 4 parts by weight in the case of using a reaction catalyst.

The tin-based catalyst is preferably an organo-tin catalyst, while it may be an inorganic tin catalyst or an organo-tin catalyst. Examples of the inorganic tin catalyst include stannous chloride and stannic chloride. The organo-tin catalyst preferably has at least one organic group such as an aliphatic or alicyclic group having a methyl, ethyl, ether, ester, or any other group in the skeleton. Specific examples thereof include tetra-n-butyltin, tri-n-butyltin acetate, n-butyltin trichloride, trimethyltin hydroxide, dimethyltin dichloride, and dibutyltin dilaurate.

The amine catalyst may also be of any type without particular limitation. The amine catalyst preferably has an organic group such as quinoclidine, amidine, diazabicycloundecene, or any other alicyclic group. Other examples of the amine catalyst include triethylamine and so on. Besides the above, examples of the reaction catalyst also include cobalt naphthenate and benzyltrimethylammonium hydroxide.

The isocyanate-based layer-forming agent is generally used in the form of a solution. The solution may be a solvent system, an emulsion, a colloidal dispersion, or an aqueous system such as an aqueous solution. Any organic solvent may be used without particular limitation as long as the components of the layer-forming agent are uniformly soluble. Examples of such an organic solvent include toluene, methyl ethyl ketone, and ethyl acetate. When an aqueous system is formed, for example, an alcohol such as n-butyl alcohol or isopropyl alcohol or a ketone such as acetone may also be added to the aqueous system. When an aqueous system is formed, a dispersing agent may be used, or a functional group less reactive with the isocyanate group, such as carboxylate salt, sulfonate salt or quaternary ammonium salt, or a water-dispersible component such as polyethylene glycol may be introduced into the isocyanate type crosslinking agent.

The acryl-based layer-forming agent may include a curable component such as a monomer and/or oligomer capable of being radically polymerized by active energy rays or heat.

The monomer and/or oligomer component capable of being polymerized radically may be a monomer and/or oligomer component having an unsaturated double bond such as that in a (meth)acryloyl group or a vinyl group. In particular, a monomer and/or oligomer component having a (meth)acryloyl group is preferably used, because of its advantage of high reactivity.

Specific examples of the monomer component having a (meth)acryloyl group include monomers generally used in forming acrylic polymers.

The monomer and/or oligomer component capable of being polymerized radically may also be a polyester (meth)acrylate, epoxy (meth)acrylate or urethane (meth)acrylate compound having two or more unsaturated double bonds of (meth)acryloyl groups, vinyl groups or the like in the polyester, epoxy or urethane skeleton similarly to the monomer component. The number of the unsaturated double bonds may be two or more, preferably four or more, more preferably six or more.

Specific examples of the monomer and/or oligomer component having (meth)acryloyl groups include (meth)acrylic acid esters of polyhydric alcohols, such as tripropylene glycol di(meth)acrylate, tetraethylene glycol di(meth)acrylate, 1,6-hexanediol di(meth)acrylate, bisphenol-A diglycidyl ether di(meth)acrylate, neopentyl glycol di(meth)acrylate, trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, and caprolactone-modified dipentaerythritol hexa(meth)acrylate.

Other examples of the monomer and/or oligomer component capable of being polymerized radically include cyanurate or isocyanurate compounds such as 2-propenyl-di-3-butenyl cyanurate, 2-hydroxyethyl bis(2-acryloxyethyl) cyanurate, tris(2-acryloxyethyl) isocyanurate, and tris(2-methacryloxyethyl) isocyanurate.

The protective layer-forming agent (H') to be used is preferably an active energy ray-curable, acryl-based layer-forming agent containing an active energy ray-curable component. The reaction of the thermosetting type, layer-forming agent (such as the epoxy-, isocyanate-, or acryl-based layer-forming agent) takes a relatively long time; in contrast, the active energy ray-curable layer-forming agent can very quickly react and provide very high productivity, and therefore, it is preferred. When the thermosetting type, layer-forming agent is applied to the polarizer (P), the properties of the polarizer (P) may be degraded by heating for the reaction. In contrast, the active energy ray-curable layer-forming agent has no such thermal effect, and therefore, it is also preferred for this reason. When the moisture-curable layer-forming agent (cyanoacrylate-based) is used, the properties of the polarizer (P) may also be altered by the moisture, because the polarizer (P) is generally a polyvinyl alcohol-based material. However, the active energy ray-curable layer-forming agent has no such thermal effect, and therefore, it is also preferred for this reason. The curable component may be a (meth)acryloyl group-containing compound or a vinyl group-containing compound (monomer or oligomer). Any of a monofunctional curable component and a bifunctional or polyfunctional curable component may be used. One or more curable components may be selected and used singly or in combination so as to produce an adhesive layer with a protective layer (H) having a tensile modulus of 100 MPa to 2000 MPa. The curable component is preferably a (meth)acryloyl group-containing compound. An N-substituted amide monomer is preferably used as the (meth)acryloyl group-containing compound. Such a monomer is preferred in view of durability. An active energy ray-curable adhesive may be used as the active energy ray-curable layer-forming agent.

The N-substituted amide monomer may be represented by the general formula (1): CH₂=C(R¹)-CONR²(R³), wherein R¹ represents a hydrogen atom or a methyl group, R² represents a hydrogen atom or a straight or branched chain alkyl group having 1 to 4 carbon atoms and optionally having a hydroxyl group, a mercapto group, an amino group, or a quaternary ammonium group, and R³ represents a hydrogen atom or a straight or branched chain alkyl group having 1 to 4 carbon atoms, provided that R² and R³ are not simultaneously a hydrogen atom, or R² and R³ are bonded to form a five-membered or six-membered ring optionally having an oxygen atom. Concerning R² or R³ in the general formula (1), the straight or branched chain alkyl group of 1 to 4 carbon atoms may be methyl, ethyl, isopropyl, or tert-butyl; the hydroxyl group-containing alkyl group may be hydroxymethyl or hydroxyethyl; and the amino group-containing alkyl group may be aminomethyl or aminoethyl. Alternatively, R² and R³ may be bonded to form an optionally oxygen atom-containing five- or six-membered ring, which may include a nitrogen-containing heterocyclic ring. Examples of the heterocyclic ring include a morpholine ring, a piperidine ring, a pyrrolidine ring, and a piperazine ring.

Examples of the N-substituted amine monomer include N-methyl(meth)acrylamide, N,N-dimethyl(meth)acrylamide, N,N-diethyl(meth)acrylamide, N-isopropylacrylamide, N-butyl(meth)acrylamide, N-hexyl(meth)acrylamide, N-methylol(meth)acrylamide, N-hydroxyethyl(meth)acrylamide, N-methylol-N-propane(meth)acrylamide, aminomethyl(meth)acrylamide, aminoethyl(meth)acrylamide, mercaptomethyl(meth)acrylamide, and mercaptoethyl(meth)acrylamide. Examples of the heterocyclic ring-containing monomer include N-acryloylmorpholine, N-acryloylpiperidine, N-methacryloylpiperidine, and N-acryloylpyrrolidine. One, or two or more of these N-substituted amide monomers may be used singly or in combination.

The N-substituted amide monomer is preferably N-hydroxyethylacrylamide, N-methylolacrylamide, N-isopropylacrylamide, or N-acryloylmorpholine. N-substituted amide monomers exhibit good adhesion to low-moisture-content polarizers or transparent protective films produced with low moisture permeable materials. In particular, the monomers listed above exhibit good adhesion, and N-hydroxyethylacrylamide is particularly preferred.

One or two or more N-substituted amide monomers may be used singly or in any combination. When two or more N-substituted amide monomers are used in combination, N-hydroxyethylacrylamide is preferably used in combination with N-acryloylmorpholine in view of durability and adhesion. In the case of this combination, the content of N-hydroxyethylacrylamide is preferably 40% by weight or more based on the total amount of N-hydroxyethylacrylamide and N-acryloylmorpholine, in terms of achieving good adhesion. The content of N-hydroxyethylacrylamide is more preferably from 40 to 90% by weight, still more preferably from 60 to 90% by weight.

Besides the above, other (meth)acryloyl group-containing compounds for use as the curable component include a variety of epoxy (meth)acrylates, urethane (meth)acrylates, and polyester (meth)acrylates, and a variety of (meth)acrylate monomers. In particular, epoxy (meth)acrylates, specifically monofunctional (meth)acrylates having an aromatic ring and a hydroxy group are preferably used. If some of these curable components are incapable of forming an adhesive layer with a tensile modulus of 100 MPa or more by themselves, they should be used in combination with the N-substituted amide monomer.

A variety of monofunctional (meth)acrylates each having an aromatic ring and a hydroxy group may be used. The hydroxy group may be present as a substituent on the aromatic ring, but in the present invention, it is preferred that the hydroxy group is present on an organic group (bonded to a hydrocarbon group, specifically bonded to an alkylene group) linking the aromatic ring and (meth)acrylate.

The monofunctional (meth)acrylate having an aromatic ring and a hydroxy group may be a reaction product of a monofunctional epoxy compound having an aromatic ring with (meth)acrylic acid. Examples of the monofunctional epoxy compound having an aromatic ring include phenyl glycidyl ether, tert-butyl phenyl glycidyl ether, and phenyl polyethylene glycol glycidyl ether. Examples of the monofunctional (meth)acrylate having an aromatic ring and a hydroxy group include 2-hydroxy-3-phenoxypropyl (meth)acrylate, 2-hydroxy-3-tert-butylphenoxypropyl (meth)acrylate, and 2-hydroxy-3-phenyl polyethylene glycol propyl (meth)acrylate.

The (meth)acryloyl group-containing compound may also be a carboxyl group-containing monomer, which is also preferred in view of adhesion. Examples of the carboxyl group-containing monomer include (meth)acrylic acid, carboxyethyl (meth)acrylate, and carboxypentyl (meth)acrylate. In particular, acrylic acid is preferred.

If necessary, the active energy ray-curable layer-forming agent, which contains a curable component, may further contain an appropriate additive in addition to the component. The active energy ray-curable layer-forming agent may be used in the form of an electron beam- or ultraviolet-curable layer-forming agent. When the layer-forming agent to be used is electron beam-curable, a photo-polymerization initiator is not necessarily added to the layer-forming agent. On the other hand, when the layer-forming agent to be used is ultraviolet-curable, a photo-polymerization initiator should be used. Such a photo-polymerization initiator is generally used in an amount of 0.1 to 10 parts by weight, preferably 0.5 to 3 parts by weight, based on 100 parts by weight of the curable component.

The protective layer-forming agent (H') may further contain a coupling agent such as a silane coupling agent or a titanium coupling agent, any of various tackifiers, an ultraviolet-absorbing agent, an antioxidant, or a stabilizer such as a heat-resistant stabilizer or a hydrolysis-resistant stabilizer. The adhesive (G') may also contain any of these stabilizers and so on.

The protective layer (H) is made from the protective layer-forming agent (H'). The protective layer (H) is generally formed on the polarizer (P). The protective layer (H) may have a thickness of 0.01 to 30 µm, preferably 0.05 to 15 µm, more preferably 0.1 to 7.5 µm. For example, when the cyanoacrylate-based, epoxy-based or isocyanate-based layer-forming agent is used as the protective layer-forming agent (H'), the thickness of the protective layer (H) is preferably from 0.01 to 5 µm, more preferably from 0.05 to 3 µm. The thickness of the protective layer (H) is preferably controlled to be in the above range from the viewpoints of the uniform coating formation and the effect on the optical properties.

The protective layer (H) preferably satisfies the relation: the photoelastic coefficient (m²/N) x the thickness (m) ≤ 1x10⁻¹⁴ (m³/N). The photoelastic coefficient may be measured as described below.

### <Photoelastic Coefficient>

The stress refractive index of a 2 cm wide optical film is measured using an ellipsometer (M220 manufactured by JASCO Corporation), while a stress of 1x10⁻⁶ to 30x10⁻⁶ is applied to the optical film. Using a plot of the measurements, the photoelastic coefficient (m²/N) is calculated from the formula Δn=cδ, wherein Δn is the stress refractive index, c is the photoelastic coefficient (m²/N), and δ is the stress (N/m²).

An object of the present invention is to prevent the polarizer (P) from being cracked by the formation of the protective layer (H) on the surface of the polarizer (P). The cracking of the polarizer is caused by expansion and contraction of the film upon moisture absorption/drying or heating of the polarizer (P). When such expansion and contraction of the polarizer (P) occur, the force is applied to the transparent protective film (E) or the protective layer (H) placed on the surface of the polarizer (P). Such stress may induce birefringence, which may seriously affect the display on an image display, because the protective layer (H) formed on the surface of the polarizer (P) according to the invention will be located on the liquid crystal cell side with respect to the polarizer (P). Specifically, a certain retardation is produced when birefringence is generated, which may cause light leakage during black display, so that the contrast ratio may be reduced and the resulting contrast distribution may be observed as display unevenness. In this case, the photoelastic coefficient may be used as an index of how easily birefringence is generated by stress. The larger photoelastic coefficient indicates that birefringence can be generated by smaller stress. In addition, the birefringence increases with increasing the thickness of the protective layer (H). The magnitude of the retardation produced when birefringence is generated may be represented by the formula: retardation=(photoelastic coefficient)x(stress)x(thickness). When in-plane birefringence is generated, polarized light is influenced by the retardation, so that the polarization of the light is changed. Liquid crystal displays using polarization are affected by unevenness of the in-plane transmittance or the like. Therefore, the component material should have a photoelastic coefficient as small as possible so that the generation of birefringence due to the effect of shrinkage and expansion of the component can be reduced. In addition, the thickness of the protective layer (H) should preferably be small so that the effect of birefringence can be small. As described above, therefore, the thickness of the protective layer (H) is preferably 30 µm or less, more preferably 15 µm or less, even more preferably 7.5 µm or less.

The protective layer (H) is generally formed by drying the protective layer-forming agent (H') at 30 to 100°C, preferably 50 to 80°C, for 0.5 to 15 minutes, while the process of forming the protective layer (H) may be appropriately selected depending on the type of the protective layer-forming agent (H'). When the cyanoacrylate-based layer-forming agent is used, the protective layer (H) can be formed in a time shorter than the above time, because it can be quickly cured.

In the pressure-sensitive adhesive polarizing plate of the present invention, the polarizer (P) and the pressure-sensitive adhesive layer (B) are laminated with the protective layer (H) interposed therebetween. The lamination is generally performed by bonding the pressure-sensitive adhesive layer (B) to the protective layer (H) provided on one side of the polarizer (P). In this case, the pressure-sensitive adhesive layer (B) to be used is generally provided on a release sheet. Alternatively, the lamination may be performed by applying a pressure-sensitive adhesive so that the pressure-sensitive adhesive layer (B) can be formed as a coating on the protective layer (H) provided on one side of the polarizer (P).

The formation of the protective layer (H) on the polarizer (P) and the bonding between the protective layer (H) and the pressure-sensitive adhesive layer (B) are preferably performed continuously. The bonding of the transparent protective film (E) to the polarizer (P) with the adhesive layer (G) is also preferably performed continuously. The process from the production of the polarizer to the bonding may also be performed continuously.

### [Other Optical Layers]

### (Formation of Surface Treatment Layer)

The pressure-sensitive adhesive polarizing plate of the present invention may further include any additional optical layer on the side of the transparent protective film (E) where the polarizer (P) is not bonded with the adhesive layer (G). Examples of such an optical layer that may be used include a hard coat layer and any other layer having undergone an anti-reflection treatment, an anti-sticking treatment, or a treatment for diffusion or antiglare purpose.

A hard coat processing is applied for the purpose of protecting the surface of the polarizing plate from damage, and this hard coat film may be formed by a method in which, for example, a curable coated film with excellent hardness, slide property etc. is added on the surface of the protective film (E) using suitable ultraviolet curable type resins, such as acrylic type and silicone type resins. Antireflection processing is applied for the purpose of antireflection of outdoor daylight on the surface of a polarizing plate and it may be prepared by forming an antireflection film according to the conventional method etc. Besides, a sticking prevention processing is applied for the purpose of adherence prevention with adjoining layer.

In addition, an anti glare processing is applied in order to prevent a disadvantage that outdoor daylight reflects on the surface of a polarizing plate to disturb visual recognition of transmitting light through the polarizing plate, and the processing may be applied, for example, by giving a fine concavo-convex structure to a surface of the protective film (E) using, for example, a suitable method, such as rough surfacing treatment method by sandblasting or embossing and a method of combining transparent fine particle. As a fine particle combined in order to form a fine concavo-convex structure on the above-mentioned surface, transparent fine particles whose average particle size is 0.5 to 50 µm, for example, such as inorganic type fine particles that may have conductivity including silica, alumina, titania, zirconia, tin oxides, indium oxides, cadmium oxides, antimony oxides, etc., and organic type fine particles including cross-linked of non-cross-linked polymers may be used. When forming fine concavo-convex structure on the surface, the amount of fine particle used is usually 2 to 70 weight parts to the transparent resin 100 weight parts that forms the fine concavo-convex structure on the surface, and preferably 5 to 50 weight parts. An anti glare layer may serve as a diffusion layer (viewing angle expanding function etc.) for diffusing transmitting light through the polarizing plate and expanding a viewing angle etc.

In addition, the above-mentioned antireflection layer, sticking prevention layer, diffusion layer, anti glare layer, etc. may be built in the protective film (E) itself, and also they may be prepared as an optical layer different from the protective film.

Other examples of optical layers that may be used in the polarizing plate of the invention include a brightness enhancement film, a reflective layer, and a retardation plate.

### [Image Display]

The pressure-sensitive adhesive polarizing plate of the present invention is preferably used to form an image display such as a liquid crystal display or an organic EL display.

### (Liquid Crystal Display)

The liquid crystal display may be formed according to conventional techniques. Specifically, the liquid crystal display may be typically formed by assembling a liquid crystal cell and the polarizing plate, optionally placing one or more layers of an appropriate component or components such as a diffusion plate, an antiglare layer, an anti-reflection film, a protective plate, a prism array, a lens array sheet, a light diffusion plate, and a backlight at an appropriate location or locations, incorporating a driving circuit, and performing any other process. The liquid crystal display may be formed according to any conventional technique, except that the pressure-sensitive adhesive polarizing plate according to the invention is used. The liquid crystal cell to be used may be of any type such as TN type, STN type, or n type.

The pressure-sensitive adhesive polarizing plate of the invention may be placed on one or both sides of a liquid crystal cell. The pressure-sensitive adhesive polarizing plates provided on both sides may be the same or different.

### [Method for Forming Liquid Crystal Display]

### [Conventional Method for Forming Liquid Crystal Display]

When an image display such as a liquid crystal display or an organic EL display is formed using a structure having the transparent protective film (E) placed on only one side of the polarizer (P) as in the pressure-sensitive adhesive polarizing plate of the invention, different levels of stress may be applied to the polarizer (P) film interfaces on one main surface side, where the transparent protective film (E) is placed, and the other main surface side. In other wards, different layer structures are provided on the front and back sides of the polarizer (P), so that different levels of external stress may be applied to the front and back sides of the polarizer film. This different in the external stress level makes the film more likely to be bent. As described below, the film that is made more likely to be bent is difficult to be processed into an image display by a conventional manufacturing process.

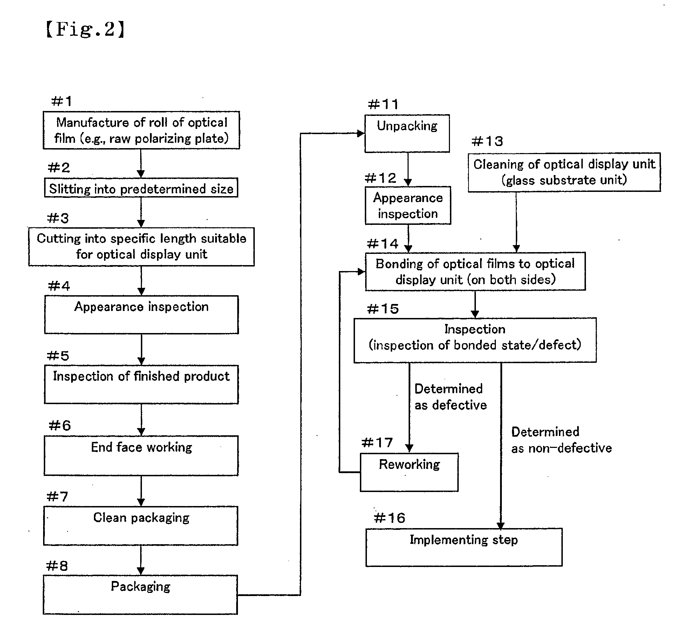

As schematically shown in Fig. 2, a conventional process of manufacturing an image device is broadly divided into the manufacturing process of an optical film manufacturer and the manufacturing process of a panel processing manufacturer. First, an optical film manufacturer produces a continuous sheet material concluding an optical film such as a polarizing plate, which includes an optical member, in the form of a material roll (#1). The material roll is then slit into a predetermined size (a size according to the size of a substrate) (#2). The slit piece of the continuous material is then cut into a specific length according to the size of the substrate to be bonded (#3). The specific-length piece of the sheet material (the optical film) is then subjected to an appearance inspection (#4). For example, the inspection method may be visual defect inspection or inspection using a known defect inspection system. The term "defect" typically means fouling of the surface or the inside, scratches, a foreign substance-containing defect with a dented shape, defective irregularities, bubbles, foreign substances, and so on. The finished product is then inspected (#5). The finished product inspection is performed according to more rigorous quality standards for determination of non-defective products than those for the appearance inspection. Subsequently, the four end faces of the piece of the sheet material are worked (#6). The working is performed to prevent the adhesive or the like from coming out of the end faces in transit. The piece of the sheet material is then subjected to clean packaging in a clean room environment (#7). Subsequently, packaging for transportation (transport packaging) is performed (#8). The piece of the sheet material manufactured as described above is transported to a panel processing manufacturer.

The panel processing manufacturer unpacks the piece of the material sheet transported (#11). An appearance inspection is then performed to check whether scratches, stains or other defects are produced in transit or during unpacking (#12). The piece of the sheet material determined as non-defective in the inspection is then transferred to the next step. This appearance inspection may be omitted in some cases. The substrate (such as a glass substrate with a sealed liquid crystal cell) to which the piece of the sheet material will be bonded is previously manufactured and cleaned before the bonding step (#13).

Subsequently, the piece of the sheet material and the optical display unit (liquid crystal cell) are bonded together (#14). The release film is peeled off from the piece of the sheet material so that the adhesive layer can be left, and one side of the substrate is bonded to the surface of the adhesive layer. The other side of the optical display unit may also be bonded in a similar manner. When the optical films are bonded to both sides of the optical display unit, the optical films having the same structure may be bonded, or the optical films having different structures may be bonded. A bonded state inspection and a defect inspection are then performed (#15). The optical display unit determined as non-defective in the inspection is transferred to an implementing step and implemented into a liquid crystal display (#16). On the other hand, the optical display unit determined as defective is subjected to a reworking process (#17). In the reworking process, the optical member is peeled off from the substrate. A new optical member is bonded to the reworked substrate (#14).

When a film susceptible to bending is used in the conventional manufacturing process described above, the following may occur. In the steps (#1) and (#2) where the polarizing plate is presented in the form of a roll, the polarizing plate is hung across the feed line, and therefore, the bending behavior is restrained by the tension. However, the tension, which restrains the bending behavior of the polarizing plate, is released by the step (#3) of cutting it into a specific length, so that bending occurs to make difficult the handling in the steps from the appearance inspection step (#4) to the step (#14) of bonding it to a liquid crystal cell. Besides the bending-induced problem with handling, the conventional manufacturing process also has the problem of an increase in manufacturing cost, because it has a large number of steps including inspection and packaging.

### [Continuous Manufacturing Method]

Such a long film may be prepared in the form of a roll, and each piece of the film may be continuously bonded to each liquid crystal cell, while it is fed from the roll under a certain tension. In this process, bending is prevented, so that the above problems can be solved. In other words, the step (#3) of cutting the polarizing plate into a specific length and the step (#14) of bonding the cut piece to a liquid crystal cell, which are separately performed in an optical film manufacturer and a panel processing manufacturer in the conventional method, may be continuously performed in a single place, so that the appearance inspection (#4), finished product inspection (#5), end face working (#6), clean packaging (#7), packaging for transportation (#8), unpacking (#11), and appearance inspection (#12) will be unnecessary and that the bending-induced problem with handling can be solved.

Such a continuous method for forming an image display includes the steps of: preparing a roll of a long sheet of the polarizing plate according to the invention; cutting the polarizing plate into a predetermined size with cutting means, while feeding the sheet from the roll; and bonding the polarizing plate to an optical display unit with the pressure-sensitive adhesive layer interposed therebetween after the cutting step.

### EXAMPLES

The present invention is described by the examples below, which are not intended to limit the scope of the invention.

### [Production of Polarizer]

A polyvinyl alcohol film with an average degree of polymerization of 2,700 and a thickness of 75 µm was stretched and fed, while it was dyed between rolls having different peripheral speeds. First, the polyvinyl alcohol film was stretched to 1.2 times in the feed direction, while it was allowed to swell by immersion in a water bath at 30°C for 1 minute. Thereafter, the film was stretched in the feed direction to 3 times the original length of the unstretched film, while it was dyed by immersion in an aqueous solution at 30°C containing 0.03% by weight of potassium iodide and 0.3% by weight of iodine for 1 minute. The film was then stretched to 6 times the original length in the feed direction, while it was immersed for 30 seconds in an aqueous solution at 60°C containing 4% by weight of boric acid and 5% by weight of potassium iodide. The resulting stretched film was then dried at 70°C for 2 minutes to give a polarizer. The polarizer had a thickness of 30 µm and a water content of 14.3% by weight.

### [Preparation of Adhesive]

At a temperature of 30°C, 100 parts of a polyvinyl alcohol-based resin having an acetoacetyl group (1200 in average degree of polymerization, 98.5% by mole in degree of saponification, 5% by mole in degree of acetoacetylation) and 50 parts of methylolmelamine were dissolved in pure water to form an aqueous solution with a controlled solid concentration of 3.7%. Eighteen parts of an aqueous colloidal alumina solution (15 nm in average particle size, 10% in solid concentration, positively charged) was added to 100 parts of the above aqueous solution to form an aqueous adhesive solution. The aqueous adhesive solution had a viscosity of 9.6 mPa·s and a pH in the range of 4 to 4.5. In contrast to the 100 parts of weigh of the polyvinyl alcohol-based resin, 74 parts of weight of colloidal alumina (15 nm in average particle size) was mixed. An aqueous colloidal alumina solution was measured with a particle size distribution meter (Nanotrac UPA150, manufactured by Nikkiso Co., Ltd.) by dynamic light scattering (optical correlation technique).

### [Formation of Pressure-Sensitive Adhesive Layer]

### <Preparation of Acryl-Based Polymer>

To a reaction vessel equipped with a condenser tube, a nitrogen introducing tube, a thermometer, and a stirrer were added 100 parts of butyl acrylate, 3 parts of acrylic acid, 0.1 parts of 2-hydroxyethyl acrylate, 0.3 parts of 2,2'-azobisisobutyronitrile, together with ethyl acetate to form a solution. While nitrogen gas was blown into the solution, the solution was then allowed to react at 55°C for 8 hours under stirring to give a solution containing an acryl-based polymer with a weight average molecular weight of 2,200,000. Ethyl acetate was then added to the acryl-based polymer-containing solution so that an acryl-based polymer solution with an adjusted solids content of 30% was obtained.

Based on 100 parts of the solids of the acryl-based polymer solution, 0.5 parts of a crosslinking agent composed mainly of an isocyanate group-containing compound (Coronate L (trade name) manufactured by Nippon Polyurethane Industry Co., Ltd.) and 0.075 parts of γ-glycidoxypropyltrimethoxysilane (KMB-403 (trade name) manufactured by Shin-Etsu Chemical Co., Ltd.) as a silane coupling agent were added in this order to the acryl-based polymer solution so that a pressure-sensitive adhesive solution was prepared. The pressure-sensitive adhesive solution was applied to the surface of a release sheet made of a release-treated polyethylene terephthalate film (38 µm in thickness) so that a 25 µm thick coating could be formed after drying, and then the coating was dried to form a pressure-sensitive adhesive layer.

### [Transparent Protective Film]

An 80 µm thick triacetylcellulose film (TD-TAC (trade name) manufactured by Fujifilm Corporation) was used.

### Example 1

### [Preparation of Polarizing Plate]

The adhesive was applied to one side of the transparent protective film so that an 80 nm thick adhesive layer could be formed after drying. The resulting protective film was bonded to on side of the polarizer with the adhesive layer interposed therebetween by means of a roller and then dried at 70°C for 6 minutes, so that a polarizing plate having the transparent protective film on only one side was prepared.

### [Protective Layer-Forming Agent]

A cyanoacrylate-based layer-forming agent (ARON ALFA (trade name) manufactured by TOAGOSEI CO., LTD.) was used.

### [Preparation of Pressure-sensitive adhesive polarizing plate]

The cyanoacrylate-based layer-forming agent was applied to the polarizer surface of the polarizing plate (the polarizer surface on which no transparent protective film was provided) using a bar coater so that a 3 µm thick coating could be formed, and the coating was subjected to post-curing at 50°C for 3 seconds. Thereafter, the pressure-sensitive adhesive layer formed on the release-treated surface of the release sheet was bonded to the polarizing plate, so that a pressure-sensitive adhesive polarizing plate was prepared.

### Example 2

### [Protective Layer-Forming Agent]

An epoxy-based layer-forming agent (CEMEDINE (trade name) manufactured by CEMEDINE Co., ltd.) was used.

### [Preparation of Pressure-sensitive adhesive polarizing plate]

The epoxy-based layer-forming agent was applied to the polarizer surface of the polarizing plate provided by example 1 (the polarizer surface on which no transparent protective film was provided) using a bar coater so that a 3 µm thick coating could be formed, and the coating was subjected to post-curing at 50°C for 3 minutes. Thereafter, the pressure-sensitive adhesive layer formed on the release-treated surface of the release sheet was bonded to the polarizing plate, so that a pressure-sensitive adhesive polarizing plate was prepared.

### Example 3

### [Protective Layer-Forming Agent]

A mixture of 100 parts by weight of an isocyanate-based layer-forming agent (AQUANATE (trade name) manufactured by NIPPON POLYURETHANE INDUSTRY CO., LTD.) and 0.2 parts by weight of 1,8-diazabicyclo[5,4,0]-undecene-7 (DBU (trade name) manufactured by San-Apro Ltd.) was diluted with 100 parts by weight of water, and the resulting solution was used.

### [Preparation of Pressure-sensitive adhesive polarizing plate]

The isocyanate-based layer-forming agent solution was applied to the polarizer surface of the polarizing plate provided by example 1 (the polarizer surface on which no transparent protective film was provided) using a bar coater so that a 1.5 µm thick coating could be formed, and the coating was subjected to post-curing at 50°C for 5 minutes. Thereafter, the pressure-sensitive adhesive layer formed on the release-treated surface of the release sheet was bonded to the polarizing plate, so that a pressure-sensitive adhesive polarizing plate was prepared.

### Example 4

### [Protective Layer-Forming Agent]

Two parts by weight of a photo-polymerization initiator (Igracure 907 (trade name) manufactured by Ciba Specialty Chemicals Inc.) was added to 100 parts by weight of hydroxyethyl acryl. The resulting solution was used as an active energy ray-curable layer-forming agent.

### [Preparation of Pressure-sensitive adhesive polarizing plate]

The active energy ray-curable layer-forming agent solution prepared as described above was applied to the polarizer surface of the polarizing plate obtained in Example 1 (the polarizer surface on which no transparent protective film was provided) using a bar coater so that a 10 µm thick coating could be formed after drying, and the coating was cured by exposure to ultraviolet radiation from a high-pressure mercury lamp at a light intensity of 40 mW/cm² (a total integrated light quantity of 1,200 mJ/cm²) for 30 seconds to form a protective layer. Thereafter, the pressure-sensitive adhesive layer formed on the release-treated surface of the release sheet was bonded to the polarizing plate, so that a pressure-sensitive adhesive polarizing plate was prepared.

### Comparative Example 1

### [Preparation of Pressure-sensitive adhesive polarizing plate]

The pressure-sensitive adhesive layer formed on the release-treated surface of the release sheet was bonded to the polarizer surface of the polarizing plate obtained in Example 1 (the polarizer surface on which no transparent protective film was provided), so that a pressure-sensitive adhesive polarizing plate was obtained.

### Comparative Example 2

### [Protective Layer-Forming Agent]

A polyvinyl acetate-based adhesive (GOHSENYL (trade name) manufactured by The Nippon Synthetic Chemical Industry Co., Ltd.) was used.

### [Preparation of Pressure-sensitive adhesive polarizing plate]

The polyvinyl acetate-based layer-forming agent was applied to the polarizer surface of the polarizing plate provided by example 1 (the polarizer surface on which no transparent protective film was provided) using a bar coater so that a 3 µm thick coating could be formed, and the coating was subjected to post-curing at 50°C for 3 minutes. Thereafter, the pressure-sensitive adhesive layer formed on the release-treated surface of the release sheet was bonded to the polarizing plate, so that a pressure-sensitive adhesive polarizing plate was prepared.

### Comparative Example 3

### [Preparation of Pressure-sensitive adhesive polarizing plate]

The protective layer-forming agent (solution) prepared in Example 4 was applied to both sides of the polarizer using a bar coater so that 10 µm thick coatings could be formed after drying, and the coatings were heated at 80°C for 2 minutes to form coating films. The coating films were cured by exposure to ultraviolet radiation from a metal halide lamp at a total integrated light quantity of 300 mJ/cm², so that a polarizing plate including the polarizer and protective layers formed on both sides of the polarizer was obtained. The pressure-sensitive adhesive layer formed on the release-treated surface of the release sheet was then bonded to the protective layer of the one side of the resulting polarizing plate, so that a pressure-sensitive adhesive polarizing plate was prepared.

### Comparative Example 4

### [Protective Layer-Forming Agent]

An emulsion-type polyurethane resin (SUPERFLEX 460 (trade name) manufactured by DAI-ICHI KOGYO SEIYAKU CO., LTD.) was used.

### [Preparation of Pressure-sensitive adhesive polarizing plate]

The aqueous polyurethane resin was applied to a 100 µm thick norbornene-based film (ZEONOR Film manufactured by ZEON CORPORATION) using a bar coater so that a 10 µm thick coating could be formed after drying, and the coating was dried in a drier at 80°C for 3 minutes to form a protective layer. The protective layer was bonded to the polarizer surface of the polarizing plate obtained in Example 1 (the polarizer surface on which no transparent protective film was provided) using a laminator. After the resulting laminate was dried at 80°C for 2 minutes, the backing (ZEONOR Film) was peeled off. Thereafter, the pressure-sensitive adhesive layer formed on the release-treated surface of the release sheet was bonded to the polarizing plate, so that a pressure-sensitive adhesive polarizing plate was obtained.

### Comparative Example 5

### [Preparation of Pressure-sensitive adhesive polarizing plate]

The protective layer-forming agent (solution) prepared in Example 5 was applied to both sides of the polarizer using a bar coater so that 10 µm thick coatings could be formed after drying, and the coatings were heated at 80°C for 2 minutes to form coating films. The coating films were cured by exposure to ultraviolet radiation from a metal halide lamp at a total integrated light quantity of 300 mJ/cm², so that a polarizing plate including the polarizer and protective layers formed on both sides of the polarizer was obtained. The pressure-sensitive adhesive layer formed on the release-treated surface of the release sheet was then bonded to the protective layer of the one side of the resulting polarizing plate, so that a pressure-sensitive adhesive polarizing plate was prepared.

The pressure-sensitive adhesive polarizing plates obtained in the examples and the comparative examples were evaluated as described below. The results are shown in Table 1. For the measurement of the tensile modulus, a 120 mm-wide, 120 mm-long, 100 µm-thick sample was prepared by a process including placing a frame between SUS plates, injecting the protective layer-forming agent into the frame, and curing the agent under the same conditions as in each example. When the protective layer-forming agent was an active energy ray-curable layer-forming agent, the layer-forming agent was poured into a frame placed on a SUS plate, and the agent was cured by applying active energy rays to the layer-forming agent under the same conditions as in each example.

### <Tensile Modulus>

The sample piece was cut into a strip of 10 mm width and 100 mm length. The sample strip was pulled in the longitudinal direction and subjected to a measurement with a tensile tester (Tensilon) under a temperature environment at 25°C and the conditions described below, and the tensile modulus was determined from the resulting S-S (Strain-Strength) curve. The measurement conditions were a pulling rate of 50 mm/minute, a chuck-chuck distance of 50 mm, and a measurement temperature of room temperature. The modulus was determined from the S-S curve by a method including drawing a tangent line from the initial rise point of the S-S curve, reading the strength at the point where an extension of the tangent line reached 100% strain, dividing the read value by the cross-sectional area of the sample strip (thickness x sample width (10 mm)), and using the quotient as the tensile modulus (also generally called Young's modulus).

### <Durability>

The resulting polarizing plate was cut into 38 cm (15 inch) diagonal pieces. The cut pieces were arranged in a crossed-Nicols configuration and bonded to both sides of a 0.5 mm thick non-alkali glass plate to form a sample. The sample was subjected to 100 cycles of a heat shock from -40°C for 30 minutes to 85°C for 30 minutes. The sample was taken out and visually observed to determine whether or not (or how many) cracks were formed. This test was performed 5 times.

In the case of the sample size (38 cm (15 inch) size) subjected to the evaluation, if the average number of the cracks is two or less, the polarizing plate typically with a small size for mobile applications will be free from cracking during practical use. It is therefore concluded that if the protective layer of the polarizing plate for mobile applications has a tensile modulus of 100 MPa or more, the polarizing plate will have satisfactory durability. For example, in order to prevent cracking in applications where the screen size is the same as the size (38 cm (15 inch) size) in this evaluation, the average number of the cracks should be less than one. It is therefore concluded that if the protective layer of the polarizing plate with 38 cm (15 inch) size has a tensile modulus of 500 MPa or more, the polarizing plate will have satisfactory durability. For further applications where the screen size is large, such as TVs, the number of the cracks should be zero in the evaluation test with the above sample size (38 cm (15 inch)). It is therefore concluded that if the protective layer of the polarizing plate with a large size such as that for TVs has a tensile modulus of 1,000 MPa or more, the polarizing plate will have satisfactory durability.

**Table 1**

| | Protective layer (H) | | | | | Evaluation |
|---|---|---|---|---|---|---|
| | Layer formation side of polarizer | Layer-forming agent (H') | | Tensile modulus (MPa) | Thickness (µm) | Number of cracks |
| | | Type | Cure type | | | |
| Example 1 | One side | Cyanoacrylate-based | Moisture-curable type | 200 | 3 | Average 1.2 (0, 2, 3, 0, 1) |
| Example 2 | One side | Epoxy-based | Thermosetting type | 700 | 3 | Average 0.6 (0, 1, 1, 1, 0) |
| Example 3 | One side | Isocyanate-based | Thermosetting type | 400 | 1.5 | Average 1 (0, 1, 2, 1, 1) |
| Example 4 | One side | Acryl-based | Active energy ray-curable type | 1600 | 10 | Average 0 (0, 0, 0, 0, 0) |
| Comparative Example 1 | One side | Absent | - | - | - | Average 7.4 (5, 9, 10, 5, 8) |
| Comparative Example 2 | One side | Polyvinyl acetate-based | Solvent removal-curable type | 4 | 3 | Average 5.4 (6, 5, 5, 6, 51 |
| Comparative Example 3 | Both sides | Acryl-based | Active energy ray-curable type | 19000 | 10 | Average 13.2 (14, 10, 17, 15, 11) |
| Comparative Example 4 | One side | Emulsion-type polyurethane | Solvent removal-curable type | 40 | 10 | Average 3.4 (3, 4, 2, 3, 5) |
| Comparative Example 5 | Both sides | Acryl-based | Active energy ray-curable type | 1600 | 10 | Many (20 or more at every time) |

### DESCRIPTION OF REFERENCE CHARACTERS

In the drawings, P represents a polarizer, E a transparent protective film, G an adhesive layer, H a protective layer, and B a pressure-sensitive adhesive layer.

## Claims

1. A pressure-sensitive adhesive polarizing plate, comprising:
a polarizer (P);
a transparent protective film (E) provided on only one side of the polarizer (P) with an adhesive layer (G) interposed therebetween;
a pressure-sensitive adhesive layer (B) provided on the other side of the polarizer (P) with a protective layer (H) interposed therebetween;
wherein the protective layer (H) is made from a protective layer-forming agent (H') that is a cyanoacrylate-based layer-forming agent, an epoxy-based layer-forming agent, an isocyanate-based layer-forming agent, or an acryl-based layer-forming agent; and **characterized in that** the protective layer (H) has a tensile modulus comprised between 100 and 2000 MPa.

2. The pressure-sensitive adhesive polarizing plate according to claim 1, wherein the protective layer-forming agent (H') is an active energy ray-curable layer-forming agent containing a curable component.

3. The pressure-sensitive adhesive polarizing plate according to claim 1, wherein the protective layer (H) satisfies the relation: photoelastic coefficient multiplied by thickness ≤ 1x10⁻¹⁴; the photoelastic coefficient being expressed in m²/N, the thickness in m and the numerical value in m³/N.

4. A method for manufacturing a pressure-sensitive adhesive polarizing plate comprising a polarizer (P), a transparent protective film (E) provided on only one side of the polarizer (P) with an adhesive layer (G) interposed therebetween, and a pressure-sensitive adhesive layer (B) provided on the other side of the polarizer (P) with a protective layer (H) interposed therebetween, comprising the steps of
bonding the transparent protective film (E) to the polarizer (P) with the adhesive layer (G) interposed therebetween;
forming the protective layer (H) on one side of the polarizer (P);
then placing the pressure-sensitive adhesive layer (B) on the protective layer (H), so that a laminate of the polarizer (P) and the pressure-sensitive adhesive layer (B) is formed,
wherein the protective layer (H) has a tensile modulus comprised between 100 to 2000 MPa; and
wherein the protective layer (H) is made from a protective layer-forming agent (H') that is a cyanoacrylate-based layer-forming agent, an epoxy-based layer-forming agent, an isocyanate-based layer-forming agent, or an acryl-based layer-forming agent.

5. The method according to claim 4, wherein the protective layer-forming agent (H') is an active energy ray-curable layer-forming agent containing a curable component.

6. The method according to claim 4, wherein the protective layer (H) satisfies the relation:
photoelastic coefficient multiplied by thickness ≤1x10⁻¹⁴; wherein the photoelastic coefficient is expressed in m²/N, the thickness in m and the numerical value in m³/N.

7. An image display, comprising the pressure-sensitive adhesive polarizing plate according to any one of claims 1 to 3.

8. A method for manufacturing an image display, comprising the steps of:
preparing a roll of a long sheet of the pressure-sensitive adhesive polarizing plate according to any one of claims 4 to 6;
cutting the pressure-sensitive adhesive polarizing plate into a predetermined size with cutting means, while feeding the sheet from the roll; and
bonding the pressure-sensitive adhesive polarizing plate to an optical display unit with the pressure-sensitive adhesive layer (B) interposed therebetween after the cutting step.

## Patentansprüche

1. Selbstklebende Polarisationsplatte, umfassend:
einen Polarisator (P);
eine transparente Schutzfolie (E), die auf nur einer Seite des Polarisators (P) bereitgestellt ist, mit einer dazwischen liegenden Klebstoffschicht (G);
eine Haftklebstoffschicht (B), die auf der anderen Seite des Polarisators (P) bereitgestellt ist, mit einer dazwischen liegenden Schutzschicht (H);
wobei die Schutzschicht (H) aus einem schutzschichtbildenden Mittel (H') hergestellt ist, welches ein schichtbildendes Mittel auf Cyanoacrylatbasis, ein schichtbildendes Mittel auf Epoxybasis, ein schichtbildendes Mittel auf Isocyanatbasis oder ein schichtbildendes Mittel auf Acrylbasis ist;
und **dadurch gekennzeichnet, dass** die Schutzschicht (H) einen Zugmodul zwischen 100 und 2000 MPa aufweist.

2. Selbstklebende Polarisationsplatte nach Anspruch 1, wobei das schutzschichtbildende Mittel (H') ein durch einen aktiven Energiestrahl härtbares schichtbildendes Mittel ist, das eine härtbare Komponente enthält.

3. Selbstklebende Polarisationsplatte nach Anspruch 1, wobei die Schutzschicht (H) die Relation erfüllt: fotoelastischer Koeffizient multipliziert mit der Dicke ≤ 1x10⁻¹⁴;
wobei der fotoelastische Koeffizient in m²/N, die Dicke in m und der numerische Wert in m³/N angegeben ist.

4. Verfahren zum Herstellen einer selbstklebenden Polarisationsplatte, umfassend einen Polarisator (P), eine transparente Schutzfolie (E), die auf nur einer Seite des Polarisators (P) bereitgestellt ist, mit einer dazwischen liegenden Klebstoffschicht (G), und eine Haftklebstoffschicht (B), die auf der anderen Seite des Polarisators (P) bereitgestellt ist, mit einer dazwischen liegenden Schutzschicht (H), umfassend die Schritte:
Kleben der transparenten Schutzfolie (E) an den Polarisator (P) mit der dazwischen liegenden Klebstoffschicht (G);
Bilden der Schutzschicht (H) auf einer Seite des Polarisators (P);
anschließendes Platzieren der Haftklebstoffschicht (B) auf der Schutzschicht (H), so dass ein Laminat aus dem Polarisator (P) und der Haftklebstoffschicht (B) gebildet wird;
wobei die Schutzschicht (H) einen Zugmodul zwischen 100 und 2.000 MPa aufweist;
wobei die Schutzschicht (H) aus einem schutzschichtbildenden Mittel (H') hergestellt ist, welches ein schichtbildendes Mittel auf Cyanoacrylatbasis, ein schichtbildendes Mittel auf Epoxybasis, ein schichtbildendes Mittel auf Isocyanatbasis oder ein schichtbildendes Mittel auf Acrylbasis ist.

5. Verfahren nach Anspruch 4, wobei das schutzschichtbildende Mittel (H') ein durch einen aktiven Energiestrahl härtbares schichtbildendes Mittel ist, das eine härtbare Komponente enthält.

6. Verfahren nach Anspruch 4, wobei die Schutzschicht (H) die Relation erfüllt: fotoelastischer Koeffizient multipliziert mit der Dicke ≤ 1x10⁻¹⁴;
wobei der fotoelastische Koeffizient in m²/N, die Dicke in m und der numerische Wert in m³/N angegeben ist.

7. Bildanzeige, umfassend die selbstklebende Polarisationsplatte nach einem der Ansprüche 1 bis 3.

8. Verfahren zum Herstellen einer Bildanzeige, umfassend die Schritte:
Herstellen einer Rolle von einer langen Bahn der selbstklebenden Polarisationsplatte nach einem der Ansprüche 4 bis 6;
Schneiden der selbstklebenden Polarisationsplatte zu einer vorbestimmten Größe mit Schneidwerkzeugen, während die Bahn von der Rolle zugeführt wird; und
Kleben der selbstklebenden Polarisationsplatte an eine optische Anzeigeeinheit mit der dazwischen liegenden Haftklebstoffschicht (B) nach dem Schneideschritt.

## Revendications

1. Plaque polarisante adhésive sensible à la pression, comprenant :
- un polariseur (P) ;
- un film protecteur transparent (E) disposé sur seulement une face du polariseur (P) avec une couche adhésive (G) interposée entre eux ;
- une couche adhésive sensible à la pression (B) disposée sur l'autre face du polariseur (P) avec une couche protectrice (H) interposée entre eux ;
- dans laquelle la couche protectrice (H) est faite à partir d'un agent de formation de couche protectrice (H') qui est un agent de formation de couche à base de cyanoacrylate, un agent de formation de couche à base d'époxy, un agent de formation de couche à base d'isocyanate ou un agent de formation de couche à base d'acryl ; et
- **caractérisée en ce que** la couche protectrice (H) a un module d'élasticité en traction compris entre 100 et 2 000 MPa.

2. Plaque polarisante adhésive sensible à la pression selon la revendication 1, dans laquelle l'agent de formation de couche protectrice (H') est un agent de formation de couche durcissable par rayonnement d'énergie active contenant un composant durcissable.

3. Plaque polarisante adhésive sensible à la pression selon la revendication 1, dans laquelle la couche protectrice (H) satisfait à la relation : coefficient photo-élastique multiplié par épaisseur ≤ 1x10⁻¹⁴ ; le coefficient photo-élastique étant exprimé en m²/N, l'épaisseur en m et la valeur numérique en m³/N.

4. Procédé de fabrication d'une plaque polarisante adhésive sensible à la pression comprenant un polariseur (P), un film protecteur transparent (E) disposé sur seulement une face du polariseur (P) avec une couche adhésive (G) interposée entre eux et une couche adhésive sensible à la pression (B) disposée sur l'autre face du polariseur (P) avec une couche protectrice (H) interposée entre eux, comprenant les étapes consistant à
- coller le film protecteur transparent (E) sur le polariseur (P) avec la couche adhésive (G) interposée entre eux ;
- former la couche protectrice (H) sur une face du polariseur (P) ;
- puis placer la couche adhésive sensible à la pression (B) sur la couche protectrice (H) de sorte qu'un stratifié du polariseur (P) et de la couche adhésive sensible à la pression (B) soit formé,
- pour lequel la couche protectrice (H) a un module d'élasticité en traction compris entre 100 et 2 000 MPa ; et
- pour lequel la couche protectrice (H) est faite à partir d'un agent de formation de couche protectrice (H') qui est un agent de formation de couche à base de cyanoacrylate, un agent de formation de couche à base d'époxy, un agent de formation de couche à base d'isocyanate ou un agent de formation de couche à base d'acryl.

5. Procédé selon la revendication 4, pour lequel l'agent de formation de couche protectrice (H') est un agent de formation de couche durcissable par rayonnement d'énergie active contenant un composant durcissable.

6. Procédé selon la revendication 4, pour lequel la couche protectrice (H) satisfait à la relation :
coefficient photo-élastique multiplié par épaisseur ≤ 1x10⁻¹⁴ ; dans laquelle le coefficient photo-élastique est exprimé en m²/N, l'épaisseur en m et la valeur numérique en m³/N.

7. Afficheur d'images, comprenant une plaque polarisante adhésive sensible à la pression selon l'une quelconque des revendications 1 à 3.

8. Procédé de fabrication d'un afficheur d'images, comprenant les étapes consistant à :
- réparer un rouleau d'une longue feuille de la plaque polarisante adhésive sensible à la pression selon l'une quelconque des revendications 4 à 6 ;
- découper la plaque polarisante adhésive sensible à la pression à une taille prédéterminée avec des moyens de découpe, tout en débitant la feuille à partir du rouleau ; et
- coller la plaque polarisante adhésive sensible à la pression sur une unité d'affichage optique avec la couche adhésive sensible à la pression (B) interposée entre elles après l'étape de découpe.
